# EUROPEAN PATENT APPLICATION

(11) **EP 4 810 923 A1**
(43) Date of publication of application: **23.09.2026**
(21) Application number: 25867179.1
(22) Date of filing: 16.12.2025

(54) **AMBIENT LIGHT DETECTOR AND INDUCTION LIGHTING DEVICE COMPRISING SAME**

(30) Priority: 31.12.2024 CN 202411987843
(71) Applicant: Self Electronics Co., Ltd., Ningbo City, Zhejiang 315103 (CN); SELF ELECTRONICS Germany GmbH, 51149 Köln (DE)
(72) Inventor: The designation of the inventor has not yet been filed
(74) Representative: 2K Patent Partnerschaft mbB
(86) International application number: PCT/CN2025/142975
(87) International publication number: WO 2026/144991

(57) **Abstract**

The present application relates to the technical field of inductive lamps, and discloses an ambient light detector and an inductive lighting device having the same. The ambient light detector comprises a light collecting member an a light sensing receiver, wherein the light collecting member is a reflector cup or a condenser lens, which is configured with a specific shape and position relative to the light sensing receiver. Through cooperation between the light collecting member and the light sensing receiver, light within a detection angle can be converged and enhanced, and light outside a detection range can be automatically shielded and not received, so that a clear detection boundary can be achieved. By receiving converged and enhanced optical signals with a clear boundary within a wide angular range, the light sensing receiver can accurately detect changes in external ambient light, and greatly reduce the environmental error when a lamp adjusts brightness according to the optical signals received by the light sensing receiver.

## Description

This application claims the priority of a Chinese patent application filed with the China National Intellectual Property Administration on December 31, 2024, with application number 202411987843.5 and titled "An Ambient Light Detector and a Motion-Activated Lighting Device Thereof," the entire contents of which are incorporated herein by reference.

### Field of Invention

The present application relates to the technical field of inductive lamps, and in particular to an ambient light detector and an inductive lighting device having the same.

### Background of Invention

An ambient light detector is a device capable of sensing the intensity of surrounding light, which is usually used to adjust the display brightness of a device to enhance user experience. Common application scenarios include brightness adjustment on display screens of smart phones, tablets, laptop computers and other electronic products. In addition, in e-readers and televisions, ambient light detectors can also be used to adjust screen color temperature to bring a more comfortable reading or viewing experience.

In indoor lighting systems, ambient light detectors can detect the brightness of the surrounding environment to control indoor lighting and realize automatic lighting adjustment. With the development of ambient light detectors, their size is getting smaller and smaller. When applied in indoor lighting systems, the range of ambient light that can be collected is relatively small. However, the ambient light indoors not only includes the light emitted by lamps, but also includes natural light such as sunlight and reflected light from surfaces of objects. Due to the narrow detection area of the ambient light detector, when it is applied in large spaces such as indoor lighting systems, the error of the collected optical signals is relatively large. During actual operation, when the reflection from objects is intense, the ambient light detector may misguide the lamps to be incorrectly turned off or dimmed, resulting in the overall ambient light in public places being too dim, affecting the normal activities of people in public places.

### Summary of Invention

In view of this, the present application provides an ambient light detector and an inductive lighting device having the same, so as to solve the problem in the prior art that when the reflection from objects is intense, the signals collected by the ambient light detector may cause the lamps to be incorrectly turned off or dimmed, resulting in the overall ambient light in public places being too dim and affecting the normal activities of personnel in public places.

According to a first aspect, the present application provides an ambient light detector, comprising: a light collecting member, which is a reflector cup; the concave surface of the reflector cup is a reflective surface, and the edge of the large opening end of the reflector cup is parallel to the main axis of the reflector cup; a light sensing receiver, mounted at the small end of the reflector cup, with the light receiving surface of the light sensing receiver facing the reflector cup.

During ambient light detection, light rays are collected by the light collecting member before being irradiated onto the light sensing receiver. To obtain the maximum incident angle of light rays and thus the maximum ambient light detection range, the edge of the large opening end of the reflector cup which serves as the light collecting member is arranged parallel to the main axis of the reflector cup. This ensures that light rays incident on the edge of the large opening end of the reflector cup within the preset detection range can still be reflected onto the light sensing receiver. In contrast, light rays outside the preset detection range, after being converged by the reflector cup, are reflected away from the light sensing receiver and thus not received. Through the cooperation of the light collecting member and the light sensing receiver, light within the detection angle can be converged and enhanced, while light outside the detection range is automatically shielded and not received, achieving a clear detection boundary. By receiving converged, enhanced light signals with a clear boundary within a wide angular range, the light sensing receiver can accurately detect changes in external ambient light, thereby greatly reducing the environmental error when the lamp adjusts its brightness according to the light signals received by the light sensing receiver.

In an optional embodiment, the light collecting member is a condenser lens; the light sensing receiver is mounted at or near the focal point of the condenser lens, with the light receiving surface of the light sensing receiver facing the condenser lens.

The relationship among the width of the light receiving surface, the focal length of the condenser lens, and the angle between the incident light rays and the main axis of the condenser lens is as follows: $tan ω \leq \frac{a}{2 f}$ wherein *a* is the width of the light receiving surface, *f* is the focal length of the condenser lens, and *ω* is the angle between the incident light ray and the main axis of the condenser lens.

During ambient light detection, light rays are collected by the light collecting member before being irradiated onto the light sensing receiver. To obtain the maximum incident angle of light rays and thus the maximum ambient light detection range, controlling the focal length of the condenser lens ensures that incident light within the preset detection range can be converged by the condenser lens and then irradiated onto the light sensing receiver. In contrast, light rays outside the preset detection range, after being converged by the condenser lens, are irradiated away from the light sensing receiver and thus not received. Through the cooperation of the light collecting member and the light sensing receiver, light within the detection angle can be converged and enhanced, while light outside the detection range is automatically shielded and not received, achieving a clear detection boundary. By receiving converged, enhanced light signals with a clear boundary within a wide angular range, the light sensing receiver can accurately detect changes in external ambient light, thereby greatly reducing the environmental error when the lamp adjusts its brightness according to the light signals received by the light sensing receiver.

In an optional embodiment, the angle between the reflective surface of the reflector cup and the light receiving surface of the light sensing receiver is not less than 90°.

In an optional embodiment, the ambient light detector further comprises a mounting bracket which is conical in shape; the condenser lens is fixedly mounted at the open end of the mounting bracket, and the light sensing receiver is fixedly mounted in the inner cavity of the mounting bracket.

In an optional embodiment, the ambient light detector further comprises a mounting housing; the mounting housing is provided with a light receiving port, the light sensing receiver is mounted inside the mounting housing, and the light collecting member is mounted on the light receiving port. By mounting the light sensing receiver inside the mounting housing, the light sensing receiver can only receive light from the light collecting member, which reduces the impact of surrounding ambient light on the light sensing receiver and lowers the environmental error of the light sensing receiver in ambient light detection.

In an optional embodiment, a mounting member is pivotally mounted on the mounting housing, and the mounting member is adapted to be coupled with an external mounting assembly. This allows the mounting housing to swing around the mounting member after installation, thereby adjusting the orientation of the light sensing receiver, changing the light detection area, and facilitating in-situ adjustment of the light detection area after the mounting housing is installed in place.

In an optional embodiment, the mounting member and the light receiving port are respectively disposed on opposite sides of the mounting housing.

According to a second aspect, the present application further provides an inductive lighting device, comprising the ambient light detector described in the first aspect. Since the inductive lighting device includes the ambient light detector, it achieves the same effects as the ambient light detector, which will not be repeated herein.

In an optional embodiment, the inductive lighting device further comprises: a lighting assembly, electrically connected to the ambient light detector, wherein the lighting assembly is adapted to adjust brightness according to the ambient light signal detected by the ambient light detector; a mounting assembly, on which both the lighting assembly and the ambient light detector are mounted.

In an optional embodiment, the mounting assembly is a cable tray, and both the lighting assembly and the ambient light detector are fixedly mounted on the cable tray.

In an optional embodiment, the mounting assembly is a conductive slide rail, and the ambient light detector is slidably mounted on the conductive slide rail

### Overview on drawings

Hereinafter, the invention will be disclosed with reference to the drawings and exemplary embodiments, from which further features, technical effects and problems to be solved will become apparent. In the drawings:
- Fig. 1: is a structural schematic view of an ambient light detector provided by an embodiment of the present application.
- Figs. 2 to 8: are schematic views of the design concept of the ambient light detector provided by an embodiment of the present application.
- Figs. 9 and 10: are schematic views of the design concept of the ambient light detector provided by another embodiment of the present application.
- Fig. 11: is a structural schematic view of an inductive lighting device provided by an embodiment of the present application.
- Fig. 12: is a structural schematic view of an inductive lighting device provided by another embodiment of the present application.

List of reference numerals: 1 light sensing receiver, 2 reflector cup, 3 condenser lens, 4 mounting bracket, 5 mounting housing, 6 mounting member, 7 lighting assembly, 8 cable tray, 9 conductive slide rail.

### Detailed description of preferred embodiments

In the following description, to illustrate rather than limit, specific details such as a particular system structure, and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

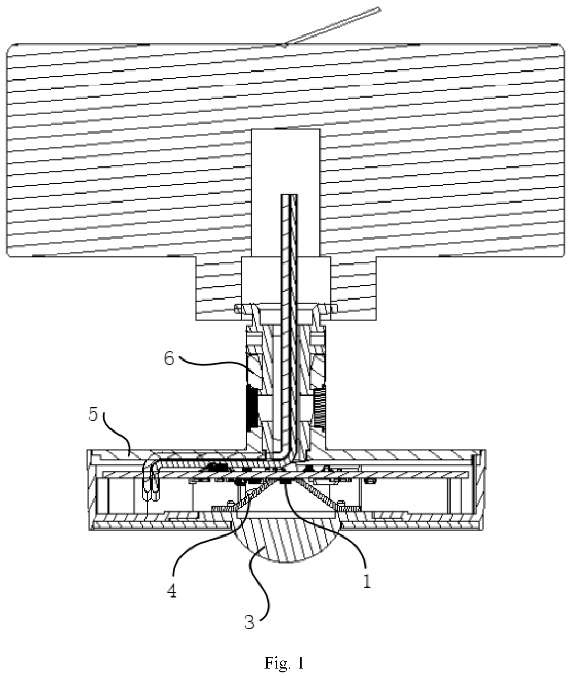

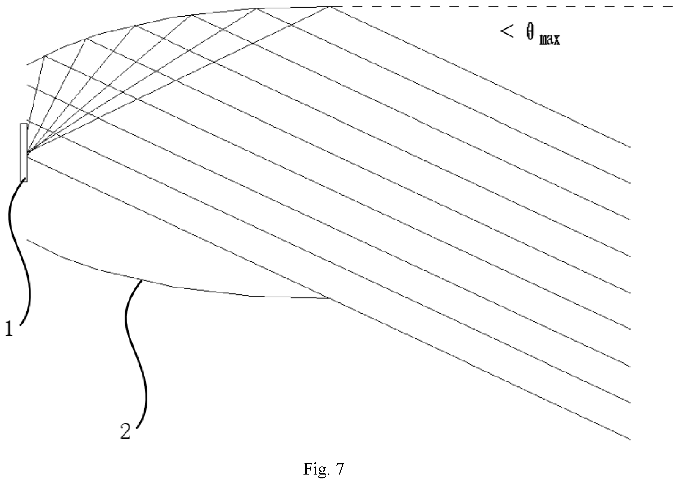

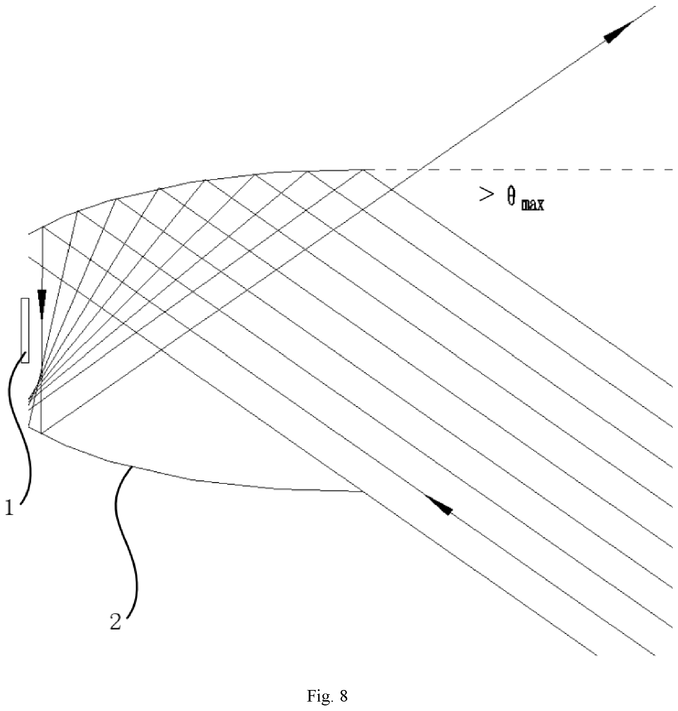

The embodiments of the present application will be described below with reference to Figs. 1 to 10.

According to an embodiment of the present application, in the first aspect, an ambient light detector is provided, which comprises a light collecting member and a light sensing receiver 1.

The light collecting member is a reflector cup 2, the concave side of the reflector cup 2 is a reflective surface, and the edge of the large opening end of the reflector cup 2 is parallel to the main axis of the reflector cup 2. The light sensing receiver 1 is mounted at the small end of the reflector cup 2, and the light receiving surface of the light sensing receiver 1 is arranged toward the reflector cup 2.

During ambient light detection, light rays are collected by the light collecting member before being irradiated onto the light sensing receiver 1. To obtain the maximum incident angle of light rays and thus the maximum ambient light detection range, the edge of the large opening end of the reflector cup 2 serving as the light collecting member is arranged parallel to the main axis of the reflector cup 2, so as to ensure that light rays incident on the edge of the large opening end of the reflector cup 2 within the preset detection range can still be reflected onto the light sensing receiver 1. In contrast, light rays outside the preset detection range, after being converged by the reflector cup, are reflected away from the light sensing receiver 1 and thus will not be received. Through the cooperation of the light collecting member and the light sensing receiver 1, light within the detection angle can be converged and enhanced, while light outside the detection range is automatically shielded and not received, so that a clear detection boundary can be achieved. By receiving converged and enhanced light signals with a clear boundary within a wide angular range, the light sensing receiver 1 can accurately detect changes in external ambient light, thereby greatly reducing the environmental error when the lamp adjusts its brightness according to the light signals received by the light sensing receiver 1.

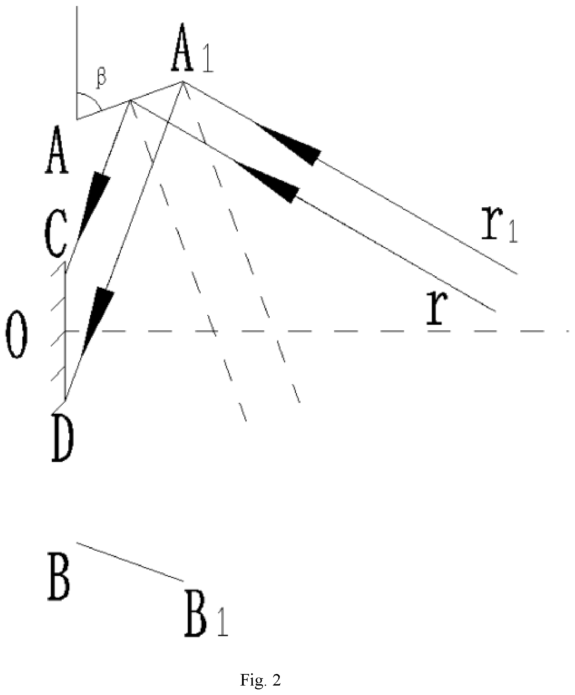

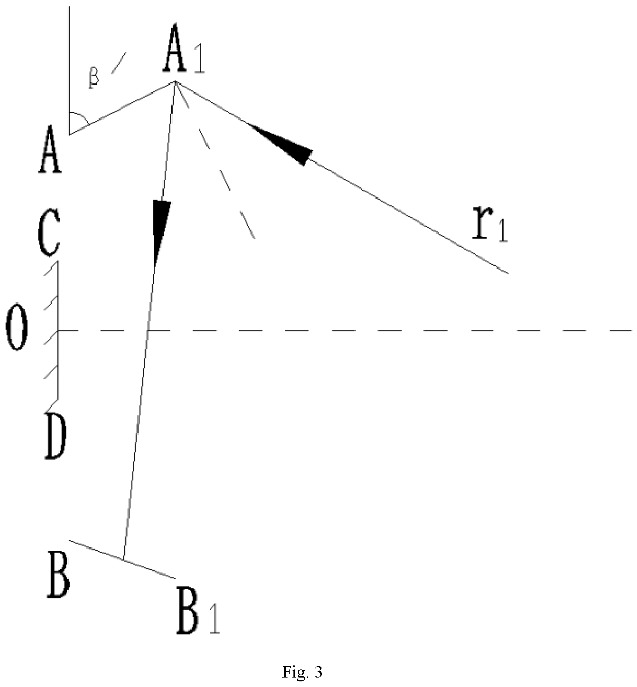

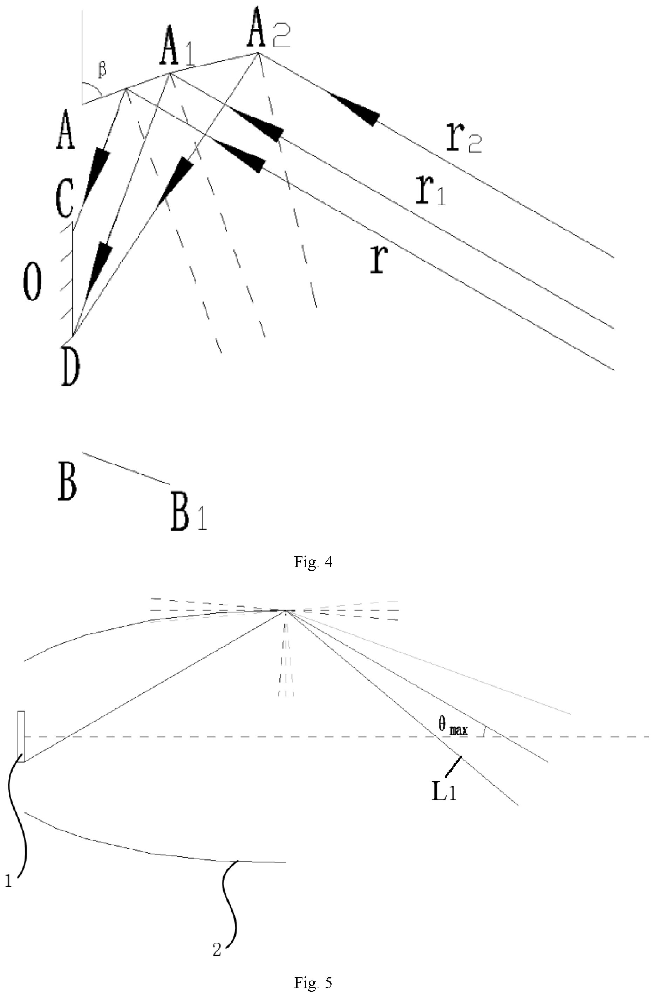

Optionally, the light sensing receiver 1 in this embodiment adopts a diode detector. The light sensing receiver 1 has a small area and cannot fill the entire small opening of the reflector cup 2 like the receiving surface of a conventional compound parabolic concentrator. To focus light radiation over the largest possible area, that is, to transmit as much energy as possible to the small opening end CD of the reflector cup 2 to the greatest extent via the reflector cup 2, the design concept of the device is shown in Figs. 2 to 4. During design, the small opening end CD of the reflector cup 2 is defined as the exit aperture of the device, and reflectors are arranged from points A and B. In the present embodiment, simulation starts with simple plane reflectors and one plane reflector AA₁ is arranged at point A. Since point O is the midpoint of AB, the light sensing receiver 1 is symmetrical about the perpendicular line passing through point O, and the reflectors on both sides are also symmetrical about the perpendicular line. To enable the light sensing receiver 1 to receive light deflected toward the CD surface as much as possible, the angle β formed between the plane reflector at point A and the CD surface must be as small as possible so as to make the aperture AB sufficiently large. However, there is a limit to the minimum value of angle β, which is the value of angle β when the light ray r₁ can be reflected to point D via point A₁. If angle β is smaller (as shown in Fig. 3), the light ray will be reflected via AA₁ to BB₁ or the bottom surface, and cannot be reflected to the CD surface area where the light sensing receiver 1 is located, thus failing to reach the light sensing receiver 1. After the first group of reflectors is arranged, a second group of reflectors A₁A₂ may be arranged adjacent thereto. For the same reason, the slope of the reflector A₁A₂ is selected to maximize the entrance aperture, which means that the reflector must reflect the incoming light ray r₂ to point D via point A₂. In this way, reflectors may be arranged adjacent to one another successively. These reflectors each have a limited size and can be made as small as possible, so that more and more small reflectors can be arranged. These small reflectors together tend to form a curve. Furthermore, the angle between the reflective surface of the reflector cup and the light receiving surface of the light sensing receiver is not less than 90°, that is, the angle between the tangential surface of the reflective surface of the reflector cup at any position toward the light sensing receiver and the light receiving surface of the light sensing receiver is an obtuse angle. To obtain the maximum incident angle of light rays, the edge of the large opening end of the reflector cup 2 is parallel to the main axis of the reflector cup 2. Fig. 5 shows the position change of the adaptive reflective surface when the incident light angle changes while the light sensing receiver 1 receives reflected light from the same reflection point. When the incident angle is larger than θmax (line L₁ in Fig. 5), the curve inclines inward, which reduces the incident caliber and the area of the incident aperture of the reflector, and the end of the reflector cup 2 would block more light rays, thus weakening the light-collecting capacity of the reflector.

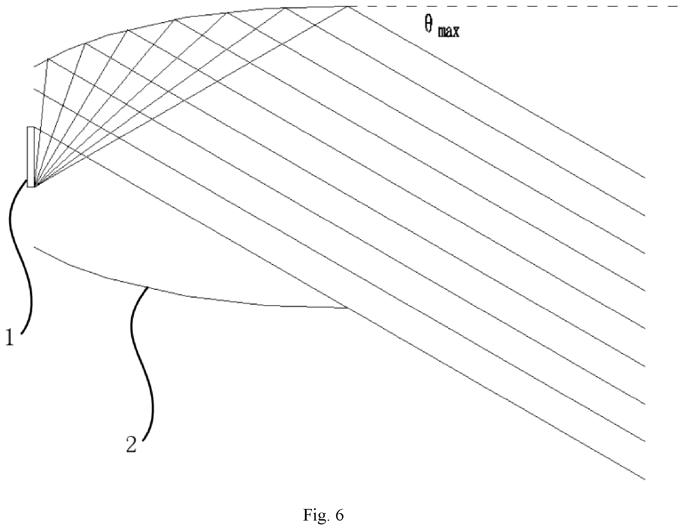

For the above reasons, as shown in Figs. 6 to 8, when incident light rays enter at an angle of θmax, part of the light rays are directly irradiated onto the light sensing receiver 1 or the lower bottom surface of the reflector cup 2, and another part of the light rays are converged to point D of the light sensing receiver 1 after being reflected by the reflector. When incident light rays enter at an angle smaller than θmax, part of the light rays are directly irradiated onto the light sensing receiver 1 or the lower bottom surface of the reflector cup 2, and another part of the light rays are converged onto the light sensing receiver 1 after being reflected by the reflector. When incident light rays enter at an angle larger than θmax, none of the light rays are irradiated onto the light sensing receiver 1.

When the ambient light detector is used for passenger flow detection, it is required that all light rays within the detection range reach the detector. The change of ambient light caused by the change of passenger flow can be used to detect the passage of pedestrians, pedestrian flow density, etc., so as to control equipment such as lamps
In another embodiment, the light collecting member may also be a condenser lens 3. The light sensing receiver 1 is mounted at the focal point of the condenser lens 3 or near the focal point of the light collecting member, and the light receiving surface of the light sensing receiver 1 is arranged toward the condenser lens 3.

The relationship among the width of the light receiving surface, the focal length of the condenser lens 3, and the angle between the incident light rays and the main axis of the condenser lens 3 is as follows: $tan ω \leq \frac{a}{2 f}$ where: *a* is the width of the light receiving surface, *f* is the focal length of the condenser lens, and *ω* is the angle between the incident light ray and the main axis of the condenser lens.

During ambient light detection, light rays are collected by the light collecting member before being incident onto the light sensing receiver 1. To obtain the maximum incident angle of light rays and thus the maximum ambient light detection range, controlling the focal length of the condenser lens 3 ensures that incident light within the preset detection range can be converged by the condenser lens 3 and then reach the light sensing receiver 1. Light rays outside the preset detection range, after being converged by the condenser lens 3, will be directed outside the light sensing receiver 1 and thus not received. Through the cooperation of the light collecting member and the light sensing receiver 1, light within the detection angle can be converged and enhanced, while light outside the detection range is automatically shielded and not received, so that a clear detection boundary can be achieved. By receiving converged and enhanced light signals with a sharp boundary within a wide angular range, the light sensing receiver 1 can accurately detect changes in external ambient light, thereby greatly reducing the environmental error when the lamp adjusts its brightness according to the light signals received by the light sensing receiver 1.

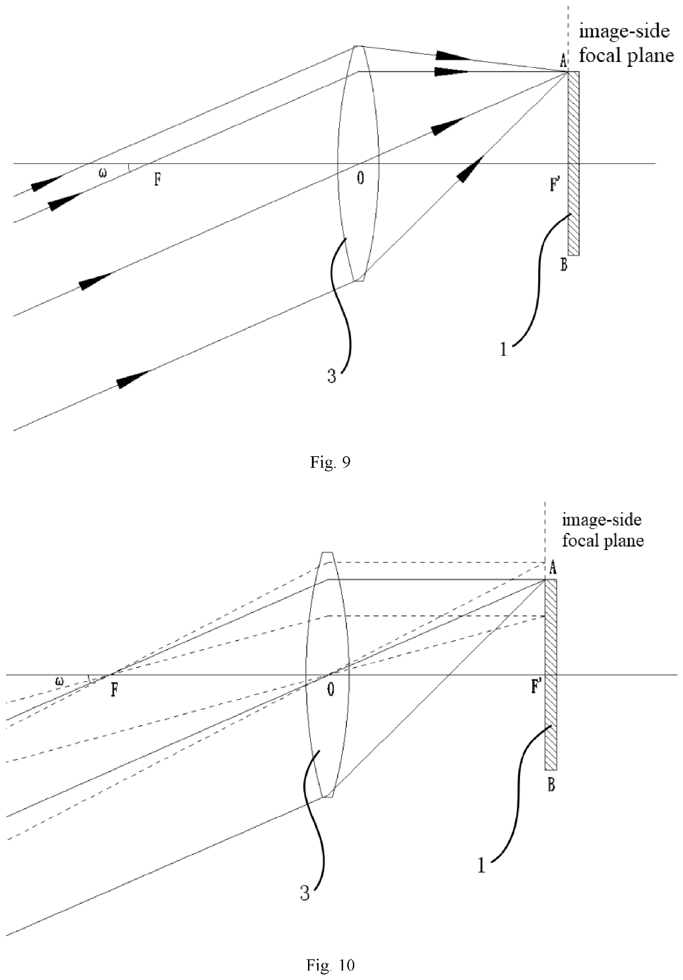

Optionally, the light sensing receiver 1 in the present embodiment may also adopt a small-size diode detector. Ambient light within a certain range is converged onto the detector through the lens. According to the boundary theory, it is only necessary to confirm that the boundary light from the environment can be projected onto the boundary of the detector. As shown in Fig. 9, since ambient light can be regarded as light rays coming from infinity with respect to the lens, such rays are incident in parallel with a certain angle ω relative to the optical axis. According to the thin-lens imaging rule, two special rays are identified: one ray passing through the object-side focal point exits parallel to the optical axis after passing through the lens; the other ray passing through the optical center maintains the same direction upon exiting. The two rays intersect at a fixed point on the image-side focal plane, which is the conjugate image point of the off-axis object point at infinity. When the light sensing receiver 1 is located on the image-side focal plane, the relationship among the width *a* of the light receiving surface, the focal length *f* of the light collecting member, and the angle *ω* between the incident light rays and the main axis of the light collecting member satisfies: $tan ω \leq \frac{a}{2 f}$

As shown in Fig. 10, when the incident angle is smaller than ω, the light rays are still converged onto the light sensing receiver 1; when the incident angle is larger than ω, the convergence point lies outside the light sensing receiver 1. When used for pedestrian flow detection, it is required that light rays within the detection range reach the detector through the lens, i.e., the incident angle satisfies the above formula such that the convergence point falls inside the light sensing receiver 1.

Further, as shown in Fig. 1, for fixedly mounting the condenser lens 3 and the light sensing receiver 1, a mounting bracket 4 which is conical in shape is further provided. The condenser lens 3 is fixedly mounted at the open end of the mounting bracket 4, and the light sensing receiver 1 is fixedly mounted in the inner cavity of the mounting bracket 4.

In one embodiment, in order to prevent light rays outside the surrounding detection range from affecting the optical signals received by the light sensing receiver 1, a mounting housing 5 is further provided. And the mounting housing 5 is provided with a light receiving port, the light sensing receiver is mounted inside the mounting housing 5, and the light collecting member is mounted on the light receiving port. By mounting the light sensing receiver 1 inside the mounting housing 5, the light sensing receiver 1 can only receive light from the light collecting member, which reduces the influence of surrounding ambient light on the light sensing receiver 1 and lowers the environmental error of the light sensing receiver 1 during ambient light detection.

In one embodiment, in order to facilitate adjustment of the detection area after the ambient light detector is installed, a mounting member 6 is pivotally mounted on the mounting housing 5. The mounting member 6 is adapted to be coupled with an external mounting assembly, so that the mounting housing 5 can swing around the mounting member 6 after installation, thereby adjusting the orientation of the light sensing receiver 1 and changing the light detection area, which facilitates in-situ adjustment of the light detection area after the mounting housing 5 is installed in place. Specifically, the mounting member 6 and the light receiving port are respectively disposed on opposite sides of the mounting housing 5, so that the orientation of the light receiving port can be adjusted by swinging the mounting housing 5, thereby changing the detection area of the light sensing receiver 1.

In order to convert the optical signals received by the light sensing receiver 1 into electrical signals, a photoelectric conversion circuit board is further mounted inside the mounting housing 5, and a photoelectric conversion circuit is arranged thereon. In one embodiment, the optical signals collected by the light sensing receiver 1 are converted into voltage signals via a sampling resistor, and power frequency interference is filtered out by a subsequent 100 Hz notch filter, so that voltage signals varying with the light intensity within the detection range can be obtained. Then, after being processed by resistor-capacitor (RC) filter circuits to filter out high-frequency signals, smooth DC signals that reflect the average illuminance of the current environment can be obtained.

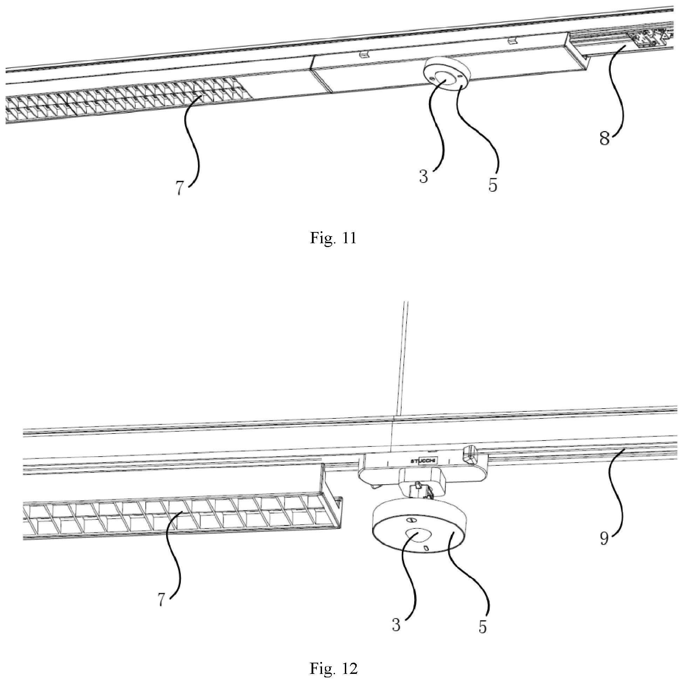

According to another embodiment of the present application, an inductive lighting device comprising the ambient light detector of the present application is further provided. The inductive lighting device further comprises a lighting assembly 7 and a mounting assembly. The lighting assembly 7 is electrically connected to the ambient light detector, and the lighting assembly 7 is adapted to adjust brightness according to ambient light signals detected by the ambient light detector. Both the lighting assembly 7 and the ambient light detector are mounted on the mounting assembly. The lighting assembly 7 may be any lamp such as an LED lamp, a fluorescent lamp, a UV lamp, a full-spectrum lamp, etc. In the present embodiment, as shown in Fig. 11, the mounting assembly is a cable tray 8, and both the lighting assembly 7 and the ambient light detector are fixedly mounted on the cable tray 8. In some other embodiments, as shown in Fig. 12, the mounting assembly may also be a conductive slide rail 9, and the ambient light detector is slidably mounted on the conductive slide rail 9, so that the ambient light detector can adjust the detection area in the horizontal direction.

The foregoing embodiments are merely intended to describe the technical solutions of this application, but are not to limit this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application, and these modifications and replacements shall fall within the protection scope of this application.

## Claims

1. An ambient light detector, comprising a light collecting member and a light sensing receiver (1), wherein:
the light collecting member is a reflector cup (2), wherein a concave side of the reflector cup (2) is a reflective surface, and an edge of a large opening end of the reflector cup (2) is parallel to a main axis of the reflector cup (2), and
the light sensing receiver (1) is mounted at a small end of the reflector cup (2), wherein a light receiving surface of the light sensing receiver (1) is arranged toward the reflector cup (2);
alternatively,
the light collecting member is a condenser lens (3), and the light sensing receiver (1) is mounted at or near a focal point of the condenser lens (3), and the light receiving surface of the light sensing receiver (1) is arranged toward the condenser lens (3),
a relationship among a width of the light receiving surface, a focal length of the condenser lens (3), and an angle between an incident light ray and the main axis of the condenser lens (3) is represented as: $tan ω \leq \frac{a}{2 f}$
wherein *a* is the width of the light receiving surface, *f* is the focal length of the condenser lens (3), and *ω* is the angle between the incident light ray and the main axis of the condenser lens (3).

2. The ambient light detector according to claim 1, wherein an angle between the reflective surface of the reflector cup (2) and the light receiving surface of the light sensing receiver (1) is not less than 90°.

3. The ambient light detector according to claim 1, further comprising a mounting bracket (4) which is conical in shape, wherein the condenser lens (3) is fixedly mounted at an open end of the mounting bracket (4), and the light sensing receiver (1) is fixedly mounted in an inner cavity of the mounting bracket (4).

4. The ambient light detector according to any one of claims 1 to 3, further comprising a mounting housing (5), wherein the mounting housing (5) is provided with a light receiving port, the light sensing receiver (1) is mounted in the mounting housing (5), and the light collecting member is mounted on the light receiving port.

5. The ambient light detector according to claim 4, wherein a mounting member (6) is pivotally mounted on the mounting housing (5), and the mounting member (6) is adapted to be coupled with an external mounting assembly.

6. The ambient light detector according to claim 5, wherein the mounting member (6) and the light receiving port are respectively disposed on opposite sides of the mounting housing (5).

7. An inductive lighting device, **characterized by** comprising the ambient light detector according to any one of claims 1 to 6.

8. The inductive lighting device according to claim 7, further comprising:
a lighting assembly (7) electrically connected to the ambient light detector, wherein the lighting assembly (7) is adapted to adjust brightness according to an ambient light signal detected by the ambient light detector;
and a mounting assembly, wherein both the lighting assembly (7) and the ambient light detector are mounted on the mounting assembly.

9. The inductive lighting device according to claim 8, wherein the mounting assembly is a cable tray (8), and both the lighting assembly (7) and the ambient light detector are fixedly mounted on the cable tray (8).

10. The inductive lighting device according to claim 8, wherein the mounting assembly is a conductive slide rail (9), and the ambient light detector is slidably mounted on the conductive slide rail (9).
